# FASCICULE DE BREVET EUROPEEN

(11) **EP 3 758 952 B1**
(45) Date de publication et mention de la délivrance du brevet: **12.01.2022**
(21) Numéro de dépôt: 19710048.0
(22) Date de dépôt: 14.02.2019
(51) Int. Cl.: B60B 7/00, B60B 7/04, B60B 19/10

(54) **ENJOLIVEUR DE ROUE ACTIF**
AKTIVE RADNABENKAPPE
ACTIVE WHEEL HUB CAP

(30) Priorité: 28.02.2018 FR 1851774
(43) Date de publication de la demande: 06.01.2021
(73) Titulaire: PSA Automobiles SA, 78300 Poissy (FR)
(72) Inventeur: PALPACUER, Eric, 75013 PARIS (FR)
(86) Numéro de dépôt international: PCT/FR2019/050323
(87) Numéro de publication internationale: WO 2019/166715

(56) Documents cités:
- EP-A1- 3 153 328
- EP-A2- 0 145 487
- WO-A1-2016/071595
- DE-A1-102011 016 534
- FR-A1- 3 044 589
- FR-A3- 2 909 966

## Description

L'invention a trait au domaine des roues des véhicules automobiles, et plus particulièrement aux enjoliveurs de roue.

La plupart des roues des véhicules comprennent une jante, un voile muni d'ajourages radiaux et solidarisé à la jante, et un enjoliveur masquant le voile et fixé à la jante.

Les enjoliveurs dits « standards », également appelés « chapeaux de roue », équipent généralement les véhicules d'entrée de gamme. Ils sont essentiellement destinés à habiller l'extérieur des roues dépourvues de style et ne présentent pas de caractéristiques aérodynamiques optimales. En outre, bien qu'ayant de nombreux et imposants passages d'air permettant un bon refroidissement des moyens de freinage couplés à la jante de roue associée, ces enjoliveurs standards ne présentent pas d'effet aérodynamique notoire, en ce que la traînée formée par les turbulences autour de la roue n'est pas sensiblement réduite.

A l'inverse d'autres enjoliveurs, dits « aérodynamiques », remplissent une fonction de style et offrent des caractéristiques aérodynamiques qui ne dégradent pas (ou quasiment pas) l'aérodynamisme de leur véhicule. Cependant, ce type d'enjoliveur présente généralement des passages d'air de petite surface qui permettent par conséquent seulement une circulation d'une petite quantité d'air vers les moyens de freinage couplés à la jante de roue associée, ce qui de ce fait a une incidence négative sur le refroidissement de ces derniers.

Afin d'améliorer la situation, il a été proposé d'équiper les roues d'enjoliveurs aérodynamiques plus perfectionnés. Tel est notamment le cas dans le document brevet FR 3 011 769 A1 qui divulgue une roue et un enjoliveur avec des pales. La roue présente une jante cylindrique et un voile avec des ajourages radiaux formés par des rayons disposés radialement entre le moyeu central et le bord périphérique de la jante. L'enjoliveur présente également des ajourages radiaux, formés par des pales présentant en particulier une section à profil spécifique aérodynamique, en «aile d'avion», qui sont disposées radialement entre la partie centrale de l'enjoliveur et son bord périphérique. Cette disposition permet ainsi aux pales d'enjoliveur de dévier le flux d'air latéral de manière indirecte et de le canaliser au travers des ajourages radiaux du voile de la roue. Toutefois, bien que les caractéristiques aérodynamiques de ces enjoliveurs perfectionnés dits également «à effet turbine», soient optimales et permettent notamment une réduction de la traînée aérodynamique et un gain de CO₂, les ajourages radiaux du voile ne présentent pas une surface optimale et limite par conséquent le flux d'air apte à refroidir les freins du véhicule.

Le document brevet publié FR 3 041 897 A1 divulgue pareillement un enjoliveur perfectionné «à effet turbine» pour roue de véhicule automobile. La roue présente classiquement une jante cylindrique, un moyeu et une structure de type à rayons, qui relie le moyeu à la jante et qui définit des ajourages radiaux. L'enjoliveur présente quant à lui une partie centrale, un bord périphérique et un voile de type à bâtons radiaux, qui relie la partie centrale au bord périphérique et qui définit également des ajourages radiaux. Ces derniers correspondent sensiblement aux ajourages radiaux de la roue et chacun d'eux présentent en outre deux pales aérodynamiques qui s'étendent radialement entre la partie centrale et le bord périphérique de l'enjoliveur. Ces pales présentent, comme pour le document précédent, une section avec un profil en «aile d'avion» mais à la différence de ce document les pales sont orientées de façon opposée. Ainsi une première pale est orientée pour aspirer l'air lors de la rotation de la roue dans le sens des aiguilles d'une montre, et une seconde pale est positionnée de façon inverse à la première pale pour également aspirer l'air lors de la rotation de la roue mais dans le sens opposé des aiguilles d'une montre. Cette orientation différente permet ainsi à l'enjoliveur d'assurer une aspiration d'air lorsqu'il est monté indistinctement sur une roue gauche ou un roue droite du véhicule. Toutefois, bien que cet enjoliveur aérodynamique perfectionné présente également des ajourages radiaux qui ont une surface satisfaisante pour ne pas limiter le flux d'air rentrant vers l'intérieur de la roue pour refroidir les freins, il n'en reste pas moins que l'orientation inverse des deux pales ne permet pas d'optimiser les performances aérodynamiques du véhicule.

Pour remédier à cet inconvénient, il est également possible d'utiliser des dispositifs de fermeture des ajourages du voile d'une jante d'une roue classique. Tel est le cas du document de brevet publié DE 10 2016 004 129 A1 qui divulgue un dispositif de recouvrement d'ajourage de roue formé par des secteurs en éventails. Ces secteurs sont au nombre de trois par ajourage et pivotent autour de la partie centrale de la roue pour fermer ou ouvrir l'ajourage correspondant. Leur déplacement est en fait effectué par des actionneurs comprenant un alliage en mémoire de forme et qui fonctionne en fonction de la plage de température de la jante de la roue lors du déplacement vers l'avant de celle-ci. Dans le cas présent, le déplacement des secteurs entre la position ouverte et la position fermée est déterminé par la température ambiante au système de freinage. Ainsi, lorsque les secteurs de chaque ajourage sont fermés, le système de freinage est beaucoup moins ventilé ce qui conduit à une augmentation de la température de la région de la jante où se trouve les freins. Puis, lorsque cette température atteint un certain seuil, les actionneurs à mémoire de forme entrainent le pivotement des secteurs autour du moyeu et du bord de la jante pour ouvrir les ajourages de la roue permettant ainsi au flux d'air de pénétrer vers l'intérieur de la roue et par conséquent de refroidir le système de freinage. Bien que ce type de dispositif permette d'améliorer l'aérodynamisme du véhicule par la fermeture des ajourages de la roue, il ne permet pas une ventilation simultanée du système de freinage. De plus, sa mise en place nécessite une fixation sur la face interne de la roue, à l'arrière des rayons du voile, ce qui ne facilite pas un démontage facile et rapide en cas de dysfonctionnement ou de changement de roue.

D'autres dispositifs aérodynamiques pour roue sont connus par EP0145487A2 et DE102011016534A1. L'invention a pour objectif de pallier au moins un des inconvénients de l'état de la technique susmentionné. Plus particulièrement, l'invention a pour objectif de fournir un enjoliveur ou un enjoliveur à pièces rapportées de type insert turbine, pour roue de véhicule automobile, qui permette d'optimiser l'aérodynamisme du véhicule tout en optimisant la thermique des freins, et ceci de manière simple et facile à mettre en œuvre.

A cet effet, l'invention a pour objet un dispositif aérodynamique pour roue de véhicule automobile, comprenant un cadre destiné à être monté sur une face extérieure de roue de véhicule automobile; au moins une pale liée au cadre et s'étendant radialement, lorsque le dispositif est en position de montage ; remarquable en ce que la ou les pales sont montées pivotantes radialement sur le cadre au moyen d'au moins un élément à mémoire de forme configuré pour modifier l'orientation de ladite ou desdites pales en fonction de la température.

Selon l'invention, le ou les éléments à mémoire de forme sont configurés pour, en présence d'une température inférieure à une limite prédéterminée, orienter la ou les pales de manière à générer, lorsque le dispositif est en rotation suivant la marche avant du véhicule, un flux d'air dirigé de la face extérieure vers la face intérieure de la roue, et en présence d'une température supérieure à la limite prédéterminée, orienter la ou les pales de manière générer un flux d'air inverse.

Selon un mode avantageux de l'invention, la température prédéterminée est supérieure à 50° et/ou inférieure à 70°.

Selon un mode avantageux de l'invention, la ou chacune des pales présente un bord d'attaque et un bord de fuite ; en présence d'une température inférieure à la limite prédéterminée, le bord d'attaque est situé axialement davantage vers l'extérieur de la roue que le bord de fuite ; et, en présence d'une température supérieure à la limite prédéterminée, le bord d'attaque est situé axialement davantage vers l'intérieur de la roue que le bord de fuite.

Selon un mode avantageux de l'invention, la ou chacune des pales comprend une extrémité radiale intérieure et une extrémité radiale extérieure ; le dispositif comprend, à chacune desdites extrémités, une liaison pivotante de ladite pale sur le cadre, le ou les éléments à mémoire de forme étant actif sur la ou les liaisons pivotantes à la ou aux extrémités radiales intérieures.

Avantageusement la pale ou chacune des pales a un profil en aile d'avion, préférentiellement de type CLARK Y. Par profil d'aile d'avion, on entend un profil dissymétrique susceptible d'accélérer le fluide davantage le long d'une des deux faces aérodynamiques de manière à générer, par la différence de pression qui en résulte, une portance.

Selon un mode avantageux de l'invention, le ou chacun des éléments à mémoire de forme constitue une liaison pivotante de la ou d'une des pales sur le cadre et est configuré pour modifier l'orientation de ladite pale par déformation en torsion dudit élément.

Avantageusement, les éléments en mémoire de forme sont en alliage de type par exemple NiTi, CuAIZn et CuNiAl, mais tout autre alliage à mémoire de forme adéquat peut également être utilisé.

Selon un mode avantageux de l'invention, le ou chacun des éléments à mémoire de forme est une tige s'étendant radialement avec une première extrémité encastrée sur le cadre et une deuxième extrémité encastrée sur la pale.

Selon un mode avantageux de l'invention, la liaison pivotante à l'extrémité radiale extérieure de la ou de chacune des pales est une liaison pivotante libre.

Selon un mode avantageux de l'invention, le cadre est circulaire avec une portion extérieure destinée à épouser un bord de jante de la roue, une portion centrale destinée à couvrir le centre de la roue et des rayons reliant la portion centrale à la portion extérieure, les pales étant disposées radialement entre lesdites portions et circonférentiellement entre lesdits rayons ; ou le cadre forme un contour fermé destiné à être inséré dans un des ajours d'un voile de la roue.

L'invention a également pour objet un véhicule automobile comprenant plusieurs roues, chacune desdites roues présentant une face extérieure sur laquelle est fixé au moins un dispositif aérodynamique ; remarquable en ce que le ou chacun des dispositifs aérodynamiques est selon l'invention.

Les mesures de l'invention sont intéressantes en ce qu'elles permettent d'optimiser à la fois les caractéristiques aérodynamiques du véhicule sur lequel sont montés des enjoliveurs turbine à pales ou des enjoliveurs à insert turbine, également à pales, tout en optimisant la thermique des freins du véhicule. Le fait que les pales de ces dispositifs soient fixées à l'aide de liaisons pivotantes comprenant au moins un élément à mémoire de forme changeant de configuration en fonction de leur température par rapport à une valeur ou une plage de température prédéterminée de la roue permet de modifier l'orientation de ces pales, et partant de favoriser soit l'entrée ou la sortie d'un flux d'air à l'intérieur de la roue. Dans la première orientation, à savoir lorsque le véhicule roule sans solliciter ses freins, la ou les pales sont en fait en configuration aspirante, c'est-à-dire dans la configuration la plus favorable à l'optimisation de l'aérodynamisme du véhicule, l'air pénètre ainsi dans le ou les ajourages de l'enjoliveur et réduit la trainée aérodynamique du véhicule. Dans la deuxième orientation, c'est-à-dire lorsque le véhicule roule en sollicitant ses freins, la ou les pales retrouvent leur configuration soufflante, l'air chaud généré par le réchauffement des freins, circule alors de l'intérieur vers l'extérieur de la roue, permettant ainsi de diminuer leur température environnante. Comme cette deuxième orientation varie seulement de quelques degrés, voire dizaines de degrés, par rapport à la première orientation, l'action aérodynamique de la ou les pales en forme d'avion est néanmoins conservée. Outre le fait d'améliorer la thermique des freins et le gain en CO₂, cette invention est d'autant plus intéressante qu'elle est facile à mettre en œuvre, faiblement encombrante et permet d'avoir des enjoliveurs de forme attractive pour les clients.

D'autres caractéristiques et avantages de la présente invention seront mieux compris à l'aide de la description et des dessins parmi lesquels :
- La figure 1 est une vue en perspective d'un dispositif aérodynamique selon l'invention, avant montage sur une roue, et après montage sur cette même roue;
- La figure 2 montre une vue en perspective d'une pale d'un dispositif aérodynamique selon l'invention ;
- La figure 3 illustre une vue en perspective suivant la coupe longitudinale II-II' de la pale de la figure 2, lorsque le dispositif aérodynamique selon l'invention est monté sur une roue ;
- La figure 4 illustre une vue en perspective de la pale de la figure 3, en configuration aspirante, c'est-à-dire lorsque le véhicule roule sans solliciter ses freins ;
- La figure 5 est une vue en perspective de la pale de la figure 3, en configuration soufflante, c'est-à-dire lorsque le véhicule roule en sollicitant ses freins.

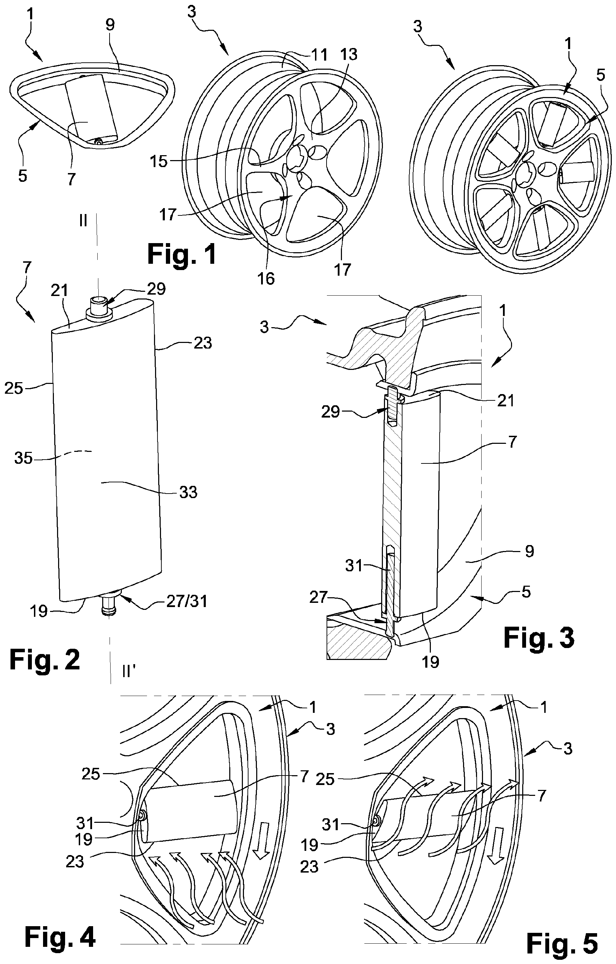

La figure 1 est une vue en perspective, schématique, d'un dispositif aérodynamique 1 selon l'invention, avant montage sur une roue 3, et après montage sur cette même roue. En l'espèce, le dispositif aérodynamique 1 de la figure 1 est un enjoliveur à pièces rapportées constituées par des inserts turbine 5. Chaque insert turbine 5 comprend une pale 7 disposée pivotante radialement sur un cadre 9 destiné à être inséré sur une face extérieure de roue 3 de véhicule automobile. Plusieurs inserts turbine 5 sont installés sur la face extérieure d'une même roue 3 de véhicule, laquelle roue 3 comprend classiquement une jante 11, un moyeu 13, et une structure à rayons 15 formant un voile 16 qui relie le moyeu à la jante 11 et définit des ajourages radiaux 17 dans lesquels sont positionnés chaque insert turbine 5.

La figure 2 montre une vue en perspective d'une pale 7 d'un dispositif aérodynamique 1 selon l'invention. Pour des raisons de visibilité, seule une pale 7 est illustrée sur cette figure 2, le reste du dispositif 1, en l'occurrence le cadre 9, n'est pas représenté. Ce dispositif aérodynamique 1 peut être un enjoliveur turbine (non représenté) à pales 7 lequel forme une seule pièce à fixer sur la face extérieure d'une roue 3 (non représentée) entre le bord de la jante 11 et le centre de la roue 13, ou être constitué de plusieurs inserts turbine 5 individuels (non représentés) à pales 7 également destinés à équiper la face extérieure d'une roue (non représentée) au niveau des ajours 17 de cette dernière. Dans les deux cas, les pales 7 de ces dispositifs 1 présentent une extrémité radiale intérieure 19 et une extrémité radiale extérieure 21 et avantageusement un bord d'attaque 23, un bord de fuite 25. Chaque pale 7 est agencée de manière pivotante et radiale à l'aide de deux liaisons pivotantes 27, 29 dans le cadre 9 (non visible sur la figure 2) du dispositif 1 correspondant au niveau de l'extrémité radiale intérieure 19 et de l'extrémité radiale extérieure 21. En outre, au moins une de ces deux liaisons pivotantes 27, 29 pivotantes comprend un élément à mémoire de forme 31 qui est configuré pour modifier l'orientation de la ou des pales 7 en fonction de la température de la roue 3 (non représentée). Généralement et avantageusement, les liaisons pivotantes 27, ayant un élément à mémoire de forme 31 sont placées à l'extrémité radiale intérieure 19 des pales 7 car cette extrémité 19 est en principe plus proche des moyens de freinage (non représentés) et donc plus susceptible d'être impactée par le dégagement de chaleur des freins au cours du déplacement du véhicule. Avantageusement, les pales 7 peuvent avoir un profil aérodynamique avec une face extérieure 33 généralement bombée et convexe, et une face intérieure 35 opposée à la face extérieure 33 qui est avantageusement plane, convexe ou concave. Dans ce cas, les notions de convexité et de concavité sont évidemment à comprendre depuis un point de vue extérieur à la pale 7. Il est à noter que les pales 7 peuvent également présenter un profil classique d'«aile d'avion», de préférence CLARK Y, dans ce cas la face intérieure 35 correspond à la face dite «intrados» et la face extérieure 33 à la face dites «extrados» de ces types de profil.

En l'occurrence, sur la figure 2 la pale 7 présente précisément une forme aérodynamique avec en outre une liaison pivotante 27, 29 à chacune de ses extrémités radiales 19, 21 mais seule l'extrémité radiale inférieure 19 comprend en fait un élément à mémoire de forme 31 ou est constituée par un élément en mémoire de forme 31, l'extrémité radiale extérieure 21 étant une liaison pivotante libre.

La figure 3 montre plus précisément une vue en perspective suivant la coupe longitudinale II-II' de la pale 7 de la figure 2 montée cette fois sur le cadre 9 d'un dispositif aérodynamique 1 selon l'invention. En l'occurrence, ce dispositif aérodynamique 1 est ici un insert turbine 5 (représenté partiellement) dont le cadre 9 est fixé sur la face extérieure d'une roue 3 (représentée partiellement). Comme illustré, sur cette figure 3, la liaison pivotante 27 reliant le cadre 9 et l'extrémité radiale intérieure 19 de la pale 7 est formée par un élément en mémoire de forme 31 qui a l'aspect d'une tige. Cette dernière 31 s'étend radialement avec une première extrémité encastrée sur le cadre et une deuxième extrémité encastrée sur la pale 7. De son côté, la liaison pivotante 29 qui raccorde le cadre et l'extrémité radiale extérieure 21 est une liaison pivotante libre, elle-même présentant en l'occurrence la forme d'une tige également encastrée mais sur le cadre 9 et l'extrémité radiale extérieure 21.

Les figures 4 et 5 illustrent une vue en perspective du fonctionnement du dispositif aérodynamique 1 de la figure 3, en particulier lorsque le véhicule (non représenté), sur lequel ce dispositif 1 est monté, est en train de rouler. En ce sens, l'élément à mémoire de forme 31 qui est encastré dans l'extrémité radiale intérieure 19 de la pale 7 est configuré pour, en présence d'une température inférieure à une limite prédéterminée, orienter la pale 7 de manière à générer, lorsque le dispositif 1 est en rotation suivant la marche avant du véhicule, un flux d'air dirigé de la face extérieure vers la face intérieure de la roue 3, et en présence d'une température supérieure à une limite prédéterminée, orienter la ou les pales 7 de manière à générer un flux d'air inverse. Avantageusement, la température limite prédéterminée est comprise entre 50°C et 70°C ; elle est avantageusement de l'ordre de 60°C.

La figure 4 montre plus particulièrement une vue de la pale 7 du dispositif aérodynamique 1 lorsque le véhicule roule sans requérir l'utilisation de ses freins. La température des freins (non représentés) correspond alors à la température ambiante et dans ce cas l'élément à mémoire de forme 31 oriente la pale 7 de façon à ce que de l'air pénètre à l'intérieur de la roue 3. Dans cette configuration, la pale 7 est dite en position aspirante (par rapport à l'extérieur du véhicule), le bord d'attaque de la pale 23 étant situé axialement davantage vers l'extérieur de la roue 3 que le bord de fuite 25 ce qui permet de réduire la trainée au niveau de la roue et donc le SCx (coefficient de traînée Cx multiplié par la surface frontale exposée à l'air) du véhicule.

A l'inverse, la figure 5 est une vue de la pale 7 du dispositif aérodynamique 1 lorsque le véhicule roule en requérant ses freins (non représentés). Dans cette situation, la température des moyens de freinage augmente au-delà de 70°C et provoque la déformation en torsion de l'élément à mémoire de forme 31, entraînant le pivotement de la pale 7 qui se retrouve en position soufflante (par rapport à l'extérieur du véhicule), position dans laquelle l'air chaud peut être évacué vers l'extérieur de la roue 3 permettant ainsi de mieux refroidir les freins. Dans cette configuration, le bord d'attaque 23 est en fait situé axialement davantage vers l'intérieur de la roue 3 que le bord de fuite 25.

De manière générale, les dispositifs aérodynamiques selon l'invention présentent l'avantage d'optimiser à la fois les caractéristiques aérodynamiques du véhicule sur lequel ils sont montés tout en optimisant la thermique des freins du véhicule. Ainsi ces enjoliveurs turbine ou inserts turbine à «pales actives» permettent en principe un gain aérodynamique de 3 dm² soit environ 1,5 g de CO₂ au kilomètre et une diminution de la température du liquide des freins de l'ordre de -10°C. Cette invention présente en outre l'avantage d'être de conception simple, de faible encombrement et aisée à mettre en œuvre.

## Revendications

1. Dispositif aérodynamique (1) pour roue (3) de véhicule automobile, comprenant:
- un cadre (9) destiné à être monté sur une face extérieure de roue (3) de véhicule automobile;
- au moins une pale (7) liée au cadre (9) et s'étendant radialement, lorsque le dispositif (1) est en position de montage ;
la ou les pales (7) étant montées pivotantes radialement sur le cadre (9) au moyen d'au moins un élément à mémoire de forme (31) configuré pour modifier l'orientation de ladite ou desdites pales (7) en fonction de la température, **caractérisé en ce que** le ou les éléments à mémoire de forme (31) sont configurés pour, en présence d'une température inférieure à une limite prédéterminée, orienter la ou les pales (7) de manière à générer, lorsque le dispositif (1) est en rotation suivant la marche avant du véhicule, un flux d'air dirigé de la face extérieure vers la face intérieure de la roue (3), et en présence d'une température supérieure la limite prédéterminée, orienter la ou les pales (7) de manière générer un flux d'air inverse.

2. Dispositif (1) selon la revendication 1, **caractérisé en ce que** la température prédéterminée est supérieure à 50° et/ou inférieure à 70°.

3. Dispositif (1) selon l'une des revendications 1 et 2, **caractérisé en ce que** la ou chacune des pales (7) présente un bord d'attaque (23) et un bord de fuite (25); en présence d'une température inférieure à la limite prédéterminée, le bord d'attaque (23) est situé axialement davantage vers l'extérieur de la roue (3) que le bord de fuite (25); et, en présence d'une température supérieure à la limite prédéterminée, le bord d'attaque (23) est situé axialement davantage vers l'intérieur de la roue que le bord de fuite (25).

4. Dispositif (1) selon l'une des revendications 1 à 3, **caractérisé en ce que** la ou chacune des pales (7) comprend une extrémité radiale intérieure (19) et une extrémité radiale extérieure (21); le dispositif (1) comprend, à chacune desdites extrémités (19, 21), une liaison pivotante (27, 29) de ladite pale (7) sur le cadre (9), le ou les éléments à mémoire de forme (31) étant actif sur la ou les liaisons pivotantes (27, 29) à la ou aux extrémités radiales intérieures (19).

5. Dispositif (1) selon l'une des revendications 1 à 4, **caractérisé en ce que** le ou chacun des éléments à mémoire de forme (31) constitue une liaison pivotante (27, 29) de la ou d'une des pales (7) sur le cadre (9) et est configuré pour modifier l'orientation de ladite pale (7) par déformation en torsion dudit élément (31).

6. Dispositif (1) selon la revendication 5, **caractérisé en ce que** le ou chacun des éléments à mémoire de forme (31) est une tige (31) s'étendant radialement avec une première extrémité encastrée sur le cadre (9) et une deuxième extrémité encastrée sur la pale (7).

7. Dispositif (1) selon la revendication 4 et l'une des revendications 5 et 6, **caractérisé en ce que** la liaison pivotante (29) à l'extrémité radiale extérieure (21) de la ou de chacune des pales (7) est une liaison pivotante libre.

8. Dispositif (1) selon l'une des revendications 1 à 7, **caractérisé en ce que** le cadre (9) est circulaire avec une portion extérieure destinée à épouser un bord de jante (11) de la roue (3), une portion centrale destinée à couvrir le centre (13) de la roue (3) et des rayons reliant la portion centrale à la portion extérieure, les pales (7) étant disposées radialement entre lesdites portions et circonférentiellement entre lesdits rayons; ou le cadre (9) forme un contour fermé destiné à être inséré dans un des ajours (17) d'un voile (16) de la roue (3).

9. Véhicule automobile comprenant plusieurs roues (3), chacune desdites roues (3) présentant une face extérieure sur laquelle est fixé au moins un dispositif aérodynamique (1), **caractérisé en ce que** le ou chacun des dispositifs aérodynamiques (1) est selon l'une des revendications 1 à 8.

## Patentansprüche

1. Aerodynamische Vorrichtung (1) für ein Kraftfahrzeugrad (3), umfassend :
- einen Rahmen (9), der dazu bestimmt ist, an einer Außenfläche eines Kraftfahrzeugrades (3) montiert zu werden ;
- mindestens eine Klinge (7), die mit dem Rahmen (9) verbunden ist und sich radial erstreckt, wenn sich die Vorrichtung (1) in der Montageposition befindet;
die Klinge oder Klingen (7) zum Schwenken montierten radial auf dem Rahmen (9) mittels zumindest ein Formgedächtniselementes (31) konfiguriert ist, die Orientierung der Klinge oder Klingen (7) in Abhängigkeit von der Temperatur zu verändern, dadurch, dass das Formgedächtniselement (e) (31) so konfiguriert ist, in Gegenwart eine Temperatur unterhalb einer vorbestimmten Grenze, orientiert, um die Klinge (n) (7), um so zu erzeugen, wenn die Vorrichtung (1) dreht, entsprechend der Vorwärtsbewegung des Fahrzeugs, eine Luft von der Außenseite in Richtung der Innenfläche des Rades gerichtete Strömung (3), und in Gegenwart einer Temperatur oberhalb der vorbestimmten Grenze, orientieren, um die Klinge (n) (7) so als eine umgekehrte Luftströmung zu erzeugen.

2. Vorrichtung (1) nach Anspruch 1, **dadurch gekennzeichnet, dass** die vorgegebene Temperatur größer als 50° und/oder kleiner als 70° ist.

3. Vorrichtung (1) nach einem der Ansprüche 1 und 2, **dadurch gekennzeichnet, dass** die oder jede der Schaufeln (7) eine Vorderkante (23) und eine Hinterkante (25) aufweist; bei einer Temperatur unterhalb der vorbestimmten Grenze die Vorderkante (23) axial weiter zur Außenseite des Rades (3) hin angeordnet ist als die Hinterkante (25) ; und bei Vorliegen einer Temperatur oberhalb des vorbestimmten Grenzwerts die Vorderkante (23) axial weiter innerhalb des Rades angeordnet ist als die Hinterkante (25).

4. Vorrichtung (1) nach einem der Ansprüche 1 bis 3, **dadurch gekennzeichnet, dass** die oder jede der Schaufeln (7) ein inneres radiales Ende (19) und ein äußeres radiales Ende (21) umfasst; die Vorrichtung (1) an jedem der Enden (19, 21) eine schwenkbare Verbindung (27, 29) der Klinge (7) am Rahmen (9) umfasst, wobei das Formgedächtniselement(e) (31) auf die Schwenklenker(n) (27, 29) am inneren radialen Ende(n) (19) wirkend.

5. Vorrichtung (1) nach einem der Ansprüche 1 bis 4, **dadurch gekennzeichnet, dass** das oder jedes der Formgedächtniselemente (31) eine Schwenkverbindung (27, 29) der oder einer der Klingen (7) am Rahmen (9) und ist konfiguriert, um die Ausrichtung der Klinge (7) durch Torsionsverformung des Elements (31) zu modifizieren.

6. Vorrichtung (1) nach Anspruch 5, **dadurch gekennzeichnet, dass** das oder jedes der Formgedächtniselemente (31) ein sich radial erstreckender Stab (31) ist, dessen erstes Ende in den Rahmen (9) eingebettet und ein zweites Ende in die Klinge eingelassen ist (7).

7. Vorrichtung (1) nach Anspruch 4 und einem der Ansprüche 5 und 6, **dadurch gekennzeichnet, dass** die Schwenkverbindung (29) am äußeren radialen Ende (21) der oder jeder der Schaufeln (7) ein verbindungsfreies Schwenken ist.

8. Vorrichtung (1) nach einem der Ansprüche 1 bis 7, **dadurch gekennzeichnet, dass** der Rahmen (9) kreisförmig ist mit einem äußeren Abschnitt, der dazu bestimmt ist, einem Felgenrand (11) des Rads (3) zu entsprechen, wobei ein mittlerer Abschnitt dazu bestimmt ist, die Mitte (13) des Rades (3) und der Speichen, die den mittleren Abschnitt mit dem äußeren Abschnitt verbinden, wobei die Schaufeln (7) radial zwischen diesen Abschnitten und in Umfangsrichtung zwischen den Speichen angeordnet sind oder der Rahmen (9) eine geschlossene beabsichtigte Kontur bildet zum Einstecken in eine der Öffnungen (17) eines Stegs (16) des Rades (3).

9. Kraftfahrzeug mit mehreren Rädern (3), wobei jedes der Räder (3) eine Außenfläche aufweist, an der mindestens eine aerodynamische Vorrichtung (1) befestigt ist, **dadurch gekennzeichnet, dass** die oder jede der aerodynamischen Vorrichtungen (1) nach einem der Ansprüche 1 bis 8.

## Claims

1. Aerodynamic device (1) for a motor vehicle wheel (3), comprising :
- a frame (9) intended to be mounted on an outer face of a motor vehicle wheel (3) ;
- at least one blade (7) linked to the frame (9) and extending radially, when the device (1) is in the mounting position ;
the blade or blades (7) being mounted to pivot radially on the frame (9) by means of at least one shape memory element (31) configured to modify the orientation of said blade or blades (7) as a function of the temperature, **characterized in that** the shape memory element (s) (31) are configured to, in the presence of a temperature below a predetermined limit, orient the blade (s) (7) so as to generate, when the device (1) is rotating according to the forward motion of the vehicle, an air flow directed from the outer face towards the inner face of the wheel (3), and in the presence of a temperature above the predetermined limit, orient the blade (s) (7) so as to generate a reverse air flow.

2. Device (1) according to claim 1, **characterized in that** the predetermined temperature is greater than 50 ° and / or less than 70 °.

3. Device (1) according to one of claims 1 and 2, **characterized in that** the or each of the blades (7) has a leading edge (23) and a trailing edge (25) ; in the presence of a temperature below the predetermined limit, the leading edge (23) is located axially more towards the outside of the wheel (3) than the trailing edge (25) ; and, in the presence of a temperature above the predetermined limit, the leading edge (23) is located axially more inward of the wheel than the trailing edge (25).

4. Device (1) according to one of claims 1 to 3, **characterized in that** the or each of the blades (7) comprises an inner radial end (19) and an outer radial end (21) ; the device (1) comprises, at each of said ends (19, 21), a pivoting connection (27, 29) of said blade (7) on the frame (9), the shape memory element (s) (31) being active on the pivoting link (s) (27, 29) at the inner radial end (s) (19).

5. Device (1) according to one of claims 1 to 4, **characterized in that** the or each of the shape memory elements (31) constitutes a pivoting connection (27, 29) of the or one of the blades (7) on the frame (9) and is configured to modify the orientation of said blade (7) by torsional deformation of said element (31).

6. Device (1) according to claim 5, **characterized in that** the or each of the shape memory elements (31) is a rod (31) extending radially with a first end embedded on the frame (9) and a second end recessed on the blade (7).

7. Device (1) according to claim 4 and one of Claims 5 and 6, **characterized in that** the pivoting connection (29) at the outer radial end (21) of the or each of the blades (7) is a connection free swivel.

8. Device (1) according to one of claims 1 to 7, **characterized in that** the frame (9) is circular with an outer portion intended to match a rim edge (11) of the wheel (3), a central portion intended to cover the center (13) of the wheel (3) and of the spokes connecting the central portion to the outer portion, the blades (7) being disposed radially between said portions and circumferentially between said spokes or the frame (9) forms a contour closed intended to be inserted into one of the openings (17) of a web (16) of the wheel (3).

9. Motor vehicle comprising several wheels (3), each of said wheels (3) having an outer face on which is fixed at least one aerodynamic device (1), **characterized in that** the or each of the aerodynamic devices (1) is according to one of claims 1 to 8.
